# EUROPÄISCHE PATENTSCHRIFT

(11) **EP 3 682 055 B1**
(45) Veröffentlichungstag und Bekanntmachung des Hinweises auf die Patenterteilung: **09.08.2023**
(21) Anmeldenummer: 18732264.9
(22) Anmeldetag: 04.06.2018
(51) Int. Cl.: D07B 1/06, B60C 15/04

(54) **WULSTKERN ZUR VERSTÄRKUNG DER WULSTBEREICHE VON FAHRZEUGLUFTREIFEN**
BEAD CORE FOR REINFORCING THE BEAD REGIONS OF PNEUMATIC VEHICLE TIRES
TRINGLE DE TALON DESTINÉE À RENFORCER LES ZONES DE TALON DE PNEUS DE VÉHICULE

(30) Priorität: 11.09.2017 DE 102017215934
(43) Veröffentlichungstag der Anmeldung: 22.07.2020
(73) Patentinhaber: Continental Reifen Deutschland GmbH, 30165 Hannover (DE)
(72) Erfinder: MOURA, Tiago, 30419 Hannover (DE); KRAMER, Thomas, 30419 Hannover (DE); SCHUNACK, Michael, 30419 Hannover (DE)
(74) Vertreter: Continental Corporation
(86) Internationale Anmeldenummer: PCT/EP2018/064560
(87) Internationale Veröffentlichungsnummer: WO 2019/048091

(56) Entgegenhaltungen:
- EP-A2- 0 431 822
- JP-A- H05 147 414
- US-B1- 6 622 766
- Wolfgang W Seidel ET AL: "Werkstofftechnik", , 1. Januar 2012 (2012-01-01), Seiten 201-209, XP055494915, München ISBN: 978-3-446-43073-0 Gefunden im Internet: URL:http://files.hanser.de/hanser/docs/201 20224_212224152618-48_978-3-446-43073-0_Le seprobe_2.pdf [gefunden am 2018-07-24]
- ANONYMOUS: "Micro-alloyed steel cord constructions for tyres", RESEARCH DISCLOSURE, KENNETH MASON PUBLICATIONS, HAMPSHIRE, UK, GB, vol. 349, no. 84, 1 May 1993 (1993-05-01), XP007119044, ISSN: 0374-4353
- ANONYMOUS: "High tensile strength steel cord constructions for tyres", RESEARCH DISCLOSURE, KENNETH MASON PUBLICATIONS, HAMPSHIRE, UK, GB, vol. 340, no. 54, 1 August 1992 (1992-08-01), XP007118007, ISSN: 0374-4353

## Beschreibung

Die Erfindung betrifft einen Wulstkern zur Verstärkung der Wulstbereiche von Fahrzeugluftreifen aus einer Anzahl von Stahldrähten mit einem Durchmesser von 0,80 mm bis 2,20 mm. Die Erfindung betrifft ferner einen Nutzfahrzeugreifen, einen Light-Truck-Reifen und einen Reifen für Personenkraftwagen, welche Reifen in den Wulstbereichen jeweils mit derartigen Wulstkernen verstärkt sind.

Die EP 0 431 822 A2 offenbart einen Wulstkern zur Verstärkung der Wulstbereiche von Fahrzeugluftreifen mit Stahldrähten aus einem Ultra-Tensile-Stahl mit einem Durchmesser von beispielsweise 0,97 mm oder 1,55 mm und beispielsweise folgender Zusammensetzung: C: 0,90 bis 0,94 Gew.%, Mn: 0,25 bis 0,40 Gew.%, P: < 0,020 Gew.%, S: < 0,20 Gew.%, Cu: < 0,04 Gew.%, Al: < 0,70 Gew.%, Rest: Eisen und unvermeidbare Verunreinigungen. Dieser Stahl enthält kein Silicium. Aus der JPH05147414 A ist ein Stahldraht zur Verstärkung der Wulstkerne von Fahrzeugluftreifen bekannt, welcher ebenfalls aus einem Ultra-Tensile-Stahl besteht, der einen Kohlenstoffgehalt von 0,90 bis 1,10 Gew.% und einen Gehalt an Chrom von 0,10 bis 0,40 Gew.% aufweist. Reifen mit Wulstkernen aus solchen Stahldrähten sollen die Dauerhaltbarkeit der Reifen in den Wulstbereichen verbessern und durch eine mögliche Reduktion der Anzahl der Stahldrähte in den Wulstbereichen das Reifengewicht reduzieren helfen. Das Buch "Werkstofftechnik" (Wolfgang W. Seidel et al., Seiten 201 bis 209, XP055494915, ISBN: 978-3-446-43073-0) gibt auf Seite 202 in einer Tabelle die in der DIN EN 100 20 festgelegten Grenzgehalte von Stählen wieder, wobei als Grenzgehalt für Silicium 0,60 Gew.% angegeben ist. Auf Seite 206 ist beschrieben, dass Silicium die Festigkeit von Stählen, insbesondere die Streckgrenze und die Warmfestigkeit erhöht, die Zähigkeit vermindert, wobei hohe Siliciumgehalte Warm- bzw. Kaltumformbarkeit verschlechtern.

Aus der EP 0 856 422 A1 ist eine Verstärkungsstruktur für einen Reifenwulst bekannt, welche aus einer Anzahl von Lagen einzelner Stahldrähte mit einem Stahlkern und einer Gummiumhüllung besteht. Die Stahldrähte weisen eine Zugfestigkeit größer als 3.100 - 600 x d MPa aufweist, wobei d der Drahtdurchmesser in Millimeter ist. Der für den Stahldraht verwendete Stahl weist insbesondere folgende Zusammensetzung auf: 0,82 Gew.% C, 0,52 Gew.% Mn, 0,23 Gew.% Si, maximal 0,02 Gew.% S und P, der Rest besteht aus Eisen und unvermeidbaren Verunreinigungen. Bei einem Durchmesser von 1,60 mm weist der Stahldraht eine Zugfestigkeit von 2.335 MPa und eine Bruchkraft von 4.684 N auf, bei einem Durchmesser von 0,89 mm weist der Stahldraht eine Bruchkraft von 1.642 N und eine Zugfestigkeit von 2.694 MPa auf. Mit solchen Stahldrähten soll eine Verringerung ihrer Anzahl in den Wulstkernen ermöglicht sein, um zu einer Gewichtsreduktion des Fahrzeugluftreifens beizutragen. Aus der WO 2016/095199 A1 ist ein Stahldraht zur Verstärkung der Wulstbereiche von Fahrzeugluftreifen bekannt, welcher einen Durchmesser im Bereich von 0,75 mm bis 2,50 mm aufweist und eine Zugfestigkeit von 2.950 - 440 x d bis 3.300 - 560 x d MPa aufweist, wobei d der Drahtdurchmesser in mm ist. Der Stahl weist folgende Zusammensetzung auf: 0,80 bis 0,85 Gew.% C, 0,15 bis 0,35 Gew.% Si, 0,60 bis 0,90 Gew.% Mn, höchstens 0,025 Gew. % P, höchstens 0,025 Gew.% S, höchstens 0,25 Gew.% Cr, höchstens 0,20 Gew. % N, höchstens 0,20 Gew.% Cu, der Rest besteht aus Eisen und unvermeidbaren Verunreinigungen. Bei einem Durchmesser von 1,55 mm weist der Stahldraht eine Zugfestigkeit von durchschnittlich 1.364 MPa, bei einem Durchmesser von 1,80 mm von durchschnittlich 2.258 MPa und bei einem Durchmesser von 2,20 mm von durchschnittlich 2.066 MPa auf. Durch die spezielle Stahlzusammensetzung soll der Stahldraht nicht nur eine hohe Festigkeit, sondern auch eine hohe Dehnung aufweisen.

Um das Gewicht von Fahrzeugluftreifen zu reduzieren, ist es bekannt, den Anteil an Stahlverstärkungen zu verringern. Gerade bei Nutzfahrzeugreifen befindet sich eine hohe Anzahl von Stahldrähten in den Wulstkernen, die zu einem erheblichen Anteil zum Gewicht der Reifen beitragen. Ein geringeres Gewicht ist mit einem geringeren Rollwiderstand und damit auch mit einem geringeren Kraftstoffverbrauch des Kraftfahrzeuges verbunden.

Der Erfindung liegt die Aufgabe zugrunde, Wulstkerne mit Stahldrähten aus UT-Stahl zur Verfügung zu stellen, die eine besonders hohe Widerstandsfähigkeit gegenüber den im Betrieb des Reifens auftretenden Belastungen und unter hohen Krafteinwirkungen besitzen und eine hohe Dauerhaltbarkeit des Reifens unterstützen.

Gelöst wird die gestellte Aufgabe erfindungsgemäß dadurch, dass die Stahldrähte aus einem Ultra-Tensile-Stahl folgender Zusammensetzung bestehen: C: 0,90 bis 0,94 Gew.%, Si: 0,40 bis 0,58 Gew.%, Mn: 0,25 bis 0,40 Gew.%, P: ≤ 0,02 Gew.%, S: ≤ 0,02 Gew.%, Cr: 0,15 bis 0,25 Gew.%, Cu: ≤ 0,04 Gew.%, Al: ≤ 0,07 Gew.%, Rest: Eisen und unvermeidbare Verunreinigungen.

Derartige Stahldrähte weisen eine hohe Festigkeit auf, wodurch es möglich ist, in den Wulstkernen die Anzahl der Stahldrähte gegenüber Stahldrähten aus NT -Stahl oder HT-Stahl gemäß dem Stand der Technik um ca. 7% bis 15 % zu verringern. Das dadurch geringere Gewicht der Wulstkerne bewirkt ein geringeres Reifengewicht und einen entsprechend verringerten Rollwiderstand.

Für die Festigkeit der Wulstkerne ist es besonders vorteilhaft, wenn die Stahldrähte eine Zugfestigkeit > 2.400 N/mm² aufweisen.

Bei einer bevorzugten Ausführungsform weisen die Stahldrähte im Wulstkern einen Durchmesser von 0,80 mm bis 2,00 mm auf. Stahldrähte in diesem Durchmesserbereich eignen sich besonders gut zur Verstärkung von Wulstbereichen von PKW-Reifen, Reifen für Light-Trucks und Nutzfahrzeugreifen.

Der Nutzfahrzeugreifen gemäß der Erfindung weist Wulstbereiche auf, welche mit Wulstkernen gemäß Anspruch 1 verstärkt sind, wobei die Stahldrähte einen Durchmesser von 1,30 mm bis 2,20 mm, insbesondere von 1,50 mm bis 2,00 mm, aufweisen.

Der Light-Truck-Reifen oder der Reifen für Personenkraftwage gemäß der Erfindung weist Wulstbereiche auf, welche mit Wulstkernen gemäß Anspruch 1 sind, wobei die Stahldrähte einen Durchmesser von 0,80 mm bis 1,60 mm aufweisen.

Weitere Merkmale, Vorteile und Einzelheiten der Erfindung werden nun anhand der Zeichnung, die Ausführungsbeispiele darstellt, näher beschrieben. Dabei zeigen
Fig. 1 einen Querschnitt einer Ausführungsform eines Wulstkernes,
Fig. 2 ein Diagramm mit Kraft-Dehnungskurven und
Fig. 3 ein Diagramm mit Spannungs-Dehnungskurven.

Wulstdrähte gemäß der Erfindung eignen sich insbesondere zur Verstärkung der Wulstbereiche von PKW-Reifen, LKW-Reifen und Reifen für Light-Trucks.

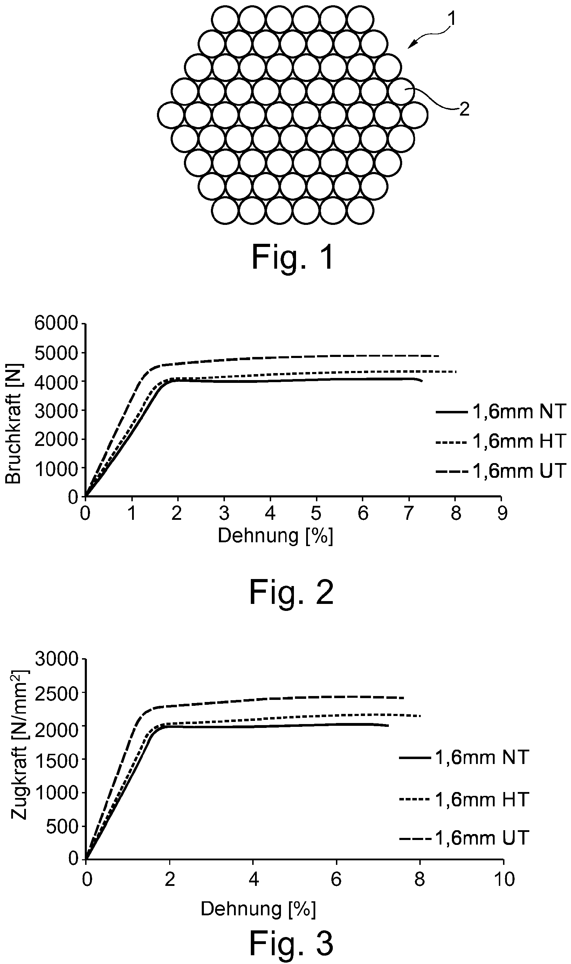

Fig. 1 zeigt einen Querschnitt eines Wulstkernes 1 zur Verstärkung der Wulstbereiche von Nutzfahrzeugreifen aus einer Vielzahl von Stahldrähten 2, im gezeigten Beispiel aus 70 Stahldrähten 2. Die Stahldrähte 2 weisen einen Durchmesser von 0,80 mm bis 2,20 mm auf und bestehen aus einem UT (Ultra-Tensile) Stahl folgender Zusammensetzung:
Kohlenstoff: 0,90 bis 0,94 Gew.%
Silizium: 0,40 bis 0,58 Gew.%
Mangan: 0,25 bis 0,40 Gew.%
Phosphor: ≤ 0,020 Gew.%
Schwefel: ≤ 0,020 Gew.%
Chrom: 0,15 bis 0,25 Gew.%
Kupfer: ≤ 0,040 Gew.%
Aluminium: ≤ 0,070 Gew.%
Rest: Eisen und unvermeidbare Verunreinigungen.

Ein derartiger UT-Stahl eignet sich besonders gut zur Herstellung von Stahldrähten 2 für Wulstkerne, da die Stahldrähte über eine hohe Bruchkraft verfügen und den Wulstkernen eine hohe Festigkeit verleihen, wobei die Anzahl der Drähte gegenüber bekannten Ausführungen aus HT (High-Tensile) -Stahl oder NT (Normal-Tensile) -Stahl in der Größenordnung von 7 % bis 15 % geringer sein kann.

In der nachstehenden Tabelle 1 sind für Stahldrähte unterschiedlicher Durchmesser die Bruchkraft und die Zugfestigkeit, ermittelt mit Drahtproben gemäß ASTM D 2969 und ASTM D 4975 bzw. BISFA E6 angegeben.

**Tabelle 1**

| Drahtdurchmesser [mm] | Bruchkraft [N] | Zugfestigkeit [N/mm²] |
|---|---|---|
| 0,89 | 1.700 | 2.734 |
| 0,965 | 1.950 | 2.668 |
| 1,30 | 3.500 | 2.638 |
| 1,60 | 4.858 | 2.429 |
| 2,00 | 7.600 | 2.420 |

Das Diagramm in Fig. 2 zeigt Kraft-Dehnungs-Kurven von Stahldrähten mit einem Durchmesser von 1,60 mm aus UT-Stahl, aus HT-Stahl und aus NT-Stahl. Auf der y-Achse ist die Bruchkraft in N auf der x-Achse ist die Dehnung in % angegeben. Fig. 3 zeigt Spannungs-Dehnungs-Kurven von Stahldrähten mit einem Durchmesser von 1,60 mm aus UT-Stahl, HT-Stahl und NT-Stahl, wobei auf der x-Achse die Dehnung in % und auf der y-Achse die Zugfestigkeit in N/mm² angegeben sind.

### Bezugszeichenliste

- 1: Wulstkern
- 2: Wulstdraht

## Patentansprüche

1. Wulstkern (1) zur Verstärkung der Wulstbereiche von Fahrzeugluftreifen aus einer Anzahl von Stahldrähten (2) mit einem Durchmesser von 0,80 mm bis 2,20 mm, wobei die Stahldrähte (2) aus einem Ultra-Tensile-Stahl folgender Zusammensetzung bestehen: C: 0,90 bis 0,94 Gew.%, Si: 0,40 bis 0,58 Gew.%, Mn: 0,25 bis 0,40 Gew.%, P: ≤ 0,020 Gew.%, S: ≤ 0,020 Gew.%, Cr: 0,15 bis 0,25 Gew.%, Cu: ≤ 0,04 Gew.%, Al: ≤ 0,070 Gew.%, Rest: Eisen und unvermeidbare Verunreinigungen.

2. Wulstkern (1) nach Anspruch 1, **dadurch gekennzeichnet, dass** die Stahldrähte (2) eine Zugfestigkeit größer 2400 N/mm² aufweisen.

3. Wulstkern (1) nach Anspruch 1 oder 2, **dadurch gekennzeichnet, dass** die Stahldrähte (2) einen Durchmesser von 0,80 mm bis 2,00 mm aufweisen.

4. Nutzfahrzeugreifen mit Wulstbereichen, welche mit Wulstkernen (1) gemäß Anspruch 1 oder 2 verstärkt sind, wobei die Stahldrähte (2) einen Durchmesser von 1,30 mm bis 2,20 mm, insbesondere von 1,50 mm bis 2,00 mm, aufweisen.

5. Light-Truck-Reifen oder Reifen für Personenkraftwagen mit Wulstbereichen, welche mit Wulstkernen (1) gemäß Anspruch 1 oder 2 verstärkt sind, wobei die Stahldrähte (2) einen Durchmesser von 0,80 mm bis 1,60 mm aufweisen.

## Claims

1. Bead core (1) for reinforcing the bead regions of pneumatic vehicle tires composed of a number of steel wires (2) having a diameter of 0.80 mm to 2.20 mm, wherein the steel wires (2) are made of an ultra-tensile steel having the composition: C: 0.90% to 0.94% by weight, Si: 0.40% to 0.58% by weight, Mn: 0.25% to 0.40% by weight, P: ≤ 0.020% by weight, S: ≤ 0.020% by weight, Cr: 0.15% to 0.25% by weight, Cu: ≤ 0.04% by weight, Al: ≤ 0.070% by weight, balance iron and unavoidable impurities.

2. Bead core (1) according to Claim 1, **characterized in that** the steel wires (2) have a tensile strength of greater than 2400 N/mm².

3. Bead core (1) according to Claim 1 or 2, **characterized in that** steel wires (2) have a diameter of 0.80 mm to 2.00 mm.

4. Commercial vehicle tire having bead regions reinforced with bead cores (1) according to Claim 1 or 2, wherein the steel wires (2) have a diameter of 1.30 mm to 2.20 mm, in particular of 1.50 mm to 2.00 mm.

5. Light truck tire or tire for passenger cars having bead regions reinforced with bead cores (1) according to Claim 1 or 2, wherein the steel wires (2) have a diameter of 0.80 mm to 1.60 mm.

## Revendications

1. Tringle de talon (1) pour le renforcement des zones de talon de pneus de véhicule, constituée d'un certain nombre de fils d'acier (2) ayant un diamètre de 0,80 mm à 2,20 mm, les fils d'acier (2) étant constitués d'un acier Ultra-Tensile ayant la constitution suivante : C : 0,90 à 0,94 % en poids, Si : 0,40 à 0,58 % en poids, Mn : 0,25 à 0,40 % en poids, P : ≤ 0,020 % en poids, S : ≤ 0,020 % en poids, Cr : 0,15 à 0,25 % en poids, Cu : ≤ 0,04 % en poids, Al : ≤ 0,070 % en poids, le reste étant constitué de fer et des impuretés inévitables.

2. Tringle de talon (1) selon la revendication 1, **caractérisée en ce que** les fils d'acier (2) présentent une résistance à la traction supérieure à 2 400 N/mm².

3. Tringle de talon (1) selon la revendication 1 ou 2, **caractérisée en ce que** les fils d'acier présentent un diamètre de 0,80 mm à 2,00 mm.

4. Pneu pour véhicule utilitaire comportant des zones de talon qui sont renforcées par des tringles de talon (1) selon la revendication 1 ou 2, les fils d'acier (2) présentant un diamètre de 1,30 mm à 2,20 mm, en particulier de 1,50 mm à 2,00 mm.

5. Pneu pour véhicule utilitaire léger ou pneu pour véhicule de tourisme comportant des zones de talon qui sont renforcées par des tringles de talon (1) selon la revendication 1 ou 2, les fils d'acier (2) présentant un diamètre de 0,80 mm à 1,60 mm.
